# EUROPEAN PATENT APPLICATION

(11) **EP 4 641 278 A1**
(43) Date of publication of application: **29.10.2025**
(21) Application number: 25171470.5
(22) Date of filing: 18.04.2025
(51) Int. Cl.: G02B 6/44, H01R 13/52

(54) **ENCLOSURE HAVING A PLURALITY OF PORTS AND ONE OR MORE CO-MOULDED PLUGS**

(30) Priority: 22.04.2024 IN 202411031921
(71) Applicant: Sterlite Technologies Limited, Gurugram, Haryana 122102 (IN)
(72) Inventor: Borrelli, Ottavio, 122102 Gurugram, Haryana (IN); Zuccarello, Sebastiano, 122102 Gurugram, Haryana (IN)
(74) Representative: Petraz, Gilberto Luigi

(57) **Abstract**

The present disclosure relates to an enclosure (100) having a plurality of ports (106) and one or more plugs (200). In particular, the plugs (200) restrict passage through at least one of the plurality of ports (106) in a sealed state and does not restrict the passage through the at least one of the plurality of ports (106) in an unsealed state. Further, the sealed state is transitioned to the unsealed state exactly one time. And, the transition between the sealed state to the unsealed state is unidirectional and irreversible and occurs precisely once.

## Description

### TECHNICAL FIELD

This application claims the benefit of Indian Application No. 202411031921 titled "Enclosure Having A Plurality Of Ports And One Or More Co-Moulded Plugs" filed by the applicant on April 22, 2024**,** which is incorporated herein by reference in its entirety.

Embodiments of the present disclosure relate to the field of wireless communication networks of fiber optics. More particularly, relates to an optical fibre enclosure having a plurality of ports and one or more co-moulded plugs.

### BACKGROUND ART

An optical fiber network finds its presence in every region across the globe. The optical fiber network supports world-wide communication systems and ensures uninterrupted services related to voice calls, internet and the like. Optical fiber cables are the foundation for the optical fiber networks and link one optical fiber network to another optical fiber network. The optical fiber cables comprise optical transmission elements, i.e., optical fibers, that are responsible for linking the optical fiber networks.

Fiber optic communication systems deliver high bandwidth communication capabilities to customers. Optical fiber connectors are an important part of most fiber optic communication systems that allow two optical fibers to be quickly, optically connected without requiring a splice. Further, the fiber optic connectors can be used to optically interconnect two lengths of optical fiber. Also, can be used to interconnect lengths of optical fiber to passive and active equipment.

Expansion of fiber optic based telecommunication service is being extended to a greater diversity of businesses and homes. Many of these extensions of service within neighborhoods, industrial parks and business developments utilize optical fiber distribution cables laid within buried conduit or ductwork. Such optical fiber distribution cables might extend from a larger fiber distribution terminal or pedestal to a smaller fiber access terminal directly adjacent the business or home to which service may be provided. From the fiber access terminal to the home or business, a fiber drop cable may connect to the home or business.

Enclosures generally are used to store multiple electrical components and such enclosures further have multiple ports for electrical wires to enter and exit the enclosure. In particular, the enclosures are generally provided with dummy plugs that are used to close the ports of the enclosure when the ports are not in use. Dummy plugs are external small components which are used to seal an enclosure port when the enclosure port is not being used. These dummy plugs are additional components to be supplied with a fiber enclosure.

Currently on products a variety of grommets with even more numerous dummy plugs can be found. However, the molds to make them come at a cost, as do other incidental expenses such as shipping and storage.

Japanese prior art reference "JPH08315905A" discloses a dummy plug for a waterproofing connector, allowing easy mould releasing at a molding process, and ensuring mould releasing free from plastic deformation, a breakage or the like.

Another prior art reference "DE102013017635A1" discloses a blind plug, which has an extraction device on both end faces of its sealing area. Preferably, the dummy plug is formed mirror-symmetrically to its main plane. As a result, the blind plug is very easy and error-free mountable. The dummy plugs mentioned in the prior art are additional components required to seal the enclosure and not a part of enclosure.

Therefore, in light of the above-stated discussion and prior art references, there exists a need to develop a simpler, more efficient optical fiber cable enclosure to address the aforementioned issues of conventionally known enclosure with dummy plug. Thus, the present disclosure provides an enclosure having plugs in a better configuration having a plurality of ports and one or more co-moulded plugs.

### SUMMARY OF THE DISCLOSURE

Embodiments of the present disclosure relates to an enclosure having a plurality of ports and one or more plugs. In particular, the plugs restrict a passage through at least one of the plurality of ports in a sealed state and does not restrict the passage through the at least one of the plurality of ports in an unsealed state. Moreover, the sealed state is transitioned to the unsealed state exactly one time. Further the transition between the sealed state to the unsealed state is unidirectional and irreversible and occurs precisely once.

According to the first aspect of the present disclosure, the one or more plugs is defined by a breakable portion connected to a fixed body portion. Further, the fixed body portion provides a passage after removal of the breakable portion.

According to the second aspect of the present disclosure, the one or more plugs is defined by a breakable portion. In particular, the breakable portion has a shape to block the passage through at least one of the plurality of ports.

According to the third aspect of the present disclosure, the plurality of ports have plurality of recesses configured to receive a portion of the one or more plugs.

According to the fourth aspect of the present disclosure, the enclosure further comprising a box to house one or more optical components and having the plurality of ports and a panel to be installed inside the box configured to receive the one or more optical components. Further, the one or more plugs are co-moulded with the panel.

According to the fifth aspect of the present disclosure, at least 5 millimetres (mm) length of the one or more plugs is received by the plurality of ports.

Another embodiment of present disclosure relates to a method of installing a fiber cable of one or more fiber cables inside an enclosure with a plurality of ports having one or more plugs. The method comprises steps of removing a breakable portion of a plug to create a passage through a fixed body portion of the one or more plugs, inserting a fiber cable of the one or more fiber cables into a port of the plurality of ports through the created passage and connecting the fiber cable of the one or more fiber cables with an optical component of one or more optical components inside the enclosure.

According to the sixth aspect of the present disclosure, the breakable portion of the one or more plugs is placed into at least one of the plurality of ports of the enclosure to restrict a passage through the at least one of the plurality of ports.

According to the seventh aspect of the present disclosure,the one or more plugs is co-moulded over a panel that is received inside the enclosure for managing the one or more optical components.

The foregoing solutions of the present disclosure are attained by providing an optical fibre enclosure having a plurality of ports and one or more co-moulded plugs.

### BRIEF DESCRIPTION OF DRAWINGS

To describe the technical solutions in the embodiments of the present disclosure or in the prior art more clearly, the following briefly describes the accompanying drawings required for describing the embodiments or the prior art. Apparently, the accompanying drawings in the following description merely show some embodiments of the present disclosure, and a person of ordinary skill in the art can derive other implementations from these accompanying drawings without creative efforts. All of the embodiments or the implementations shall fall within the protection scope of the present disclosure.
FIG. 1A is a pictorial snapshot illustrating a perspective view of an optical fibre enclosure in accordance with an embodiment of the present disclosure.
FIG. 1B is a pictorial snapshot illustrating a front view of the enclosure in accordance with an embodiment of the present disclosure.
**FIG.** 2 is a pictorial snapshot illustrating a panel of the enclosure in accordance with an embodiment of the present disclosure.
FIG. 3 is a flow chart illustrating a method of installing a fiber cable inside an enclosure with a plurality of ports having one or more plugs in accordance with an embodiment of the present disclosure.

The optical fiber enclosure is illustrated in the accompanying drawings, which like reference letters indicate corresponding parts in the various figures. It should be noted that the accompanying figure is intended to present illustrations of exemplary embodiments of the present disclosure. This figure is not intended to limit the scope of the present disclosure. It should also be noted that the accompanying figure is not necessarily drawn to scale.

### DETAILED DESCRIPTION

The detailed description of the appended drawings is intended as a description of the currently preferred aspects of the present disclosure, and is not intended to represent the only form in which the present disclosure may be practiced. It is to be understood that the same or equivalent functions may be accomplished by different aspects that are intended to be encompassed within the spirit and scope of the present disclosure.

Moreover, although the following description contains many specifics for the purposes of illustration, anyone skilled in the art will appreciate that many variations and/or alterations to said details are within the scope of the present technology. Similarly, although many of the features of the present technology are described in terms of each other, or in conjunction with each other, one skilled in the art will appreciate that many of these features can be provided independently of other features. Accordingly, this description of the present technology is set forth without any loss of generality to, and without imposing limitations upon, the present technology.

Those skilled in the art will be aware that the present disclosure is subject to variations and modifications other than those specifically described. It is to be understood that the present disclosure includes all such variations and modifications. The disclosure also includes all such steps, features, compositions and compounds referred to or indicated in this specification, individually or collectively, and any and all combinations of any or more of such steps or features.

### Definitions:

For convenience, before further description of the present disclosure, certain terms employed in the specification, and examples are collected here. These definitions should be read in the light of the remainder of the disclosure and understood as by a person of skill in the art. The terms used herein have the meanings recognized and known to those of skill in the art, however, for convenience and completeness, particular terms and their meanings are set forth below.

**The** articles "a", "an" and "the" are used to refer to one or to more than one (i.e., to at least one) of the grammatical object of the article.

The terms "comprise" and "comprising" are used in the inclusive, open sense, meaning that additional elements may be included. It is not intended to be construed as "consists of only". Throughout this specification, unless the context requires otherwise the word "comprise", and variations such as "comprises" and "comprising", will be understood to imply the inclusion of a stated element or step or group of element or steps but not the exclusion of any other element or step or group of element or steps.

The term "including" is used to mean "including but not limited to". "Including" and "including but not limited to" are used interchangeably.

### The following brief definition of terms shall apply throughout the present disclosure:

Term "optical fiber" as used herein refers to a light guide that provides highspeed data transmission. The optical fiber has one or more glass core regions and one or more glass cladding regions. The light moving through the glass core regions of the optical fiber relies upon the principle of total internal reflection, where the glass core regions have a higher refractive index (n1) than the refractive index (n2) of the glass cladding region of the optical fiber.

Term "optical fiber cable" as used herein refers to a cable that encloses a plurality of optical fibers.

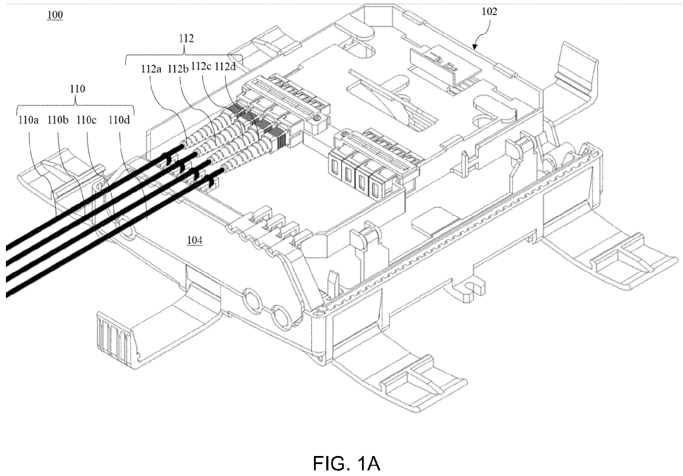

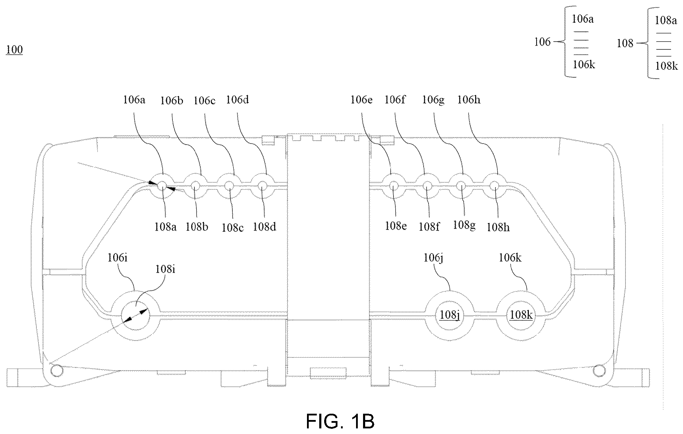

FIG. 1A and Fig. 1B are pictorial snapshot illustrating a perspective view and front view of an optical fibre enclosure 100 in accordance with an embodiment of the present disclosure.

The enclosure 100 may have a box 102 and a panel 104. Particularly, the box 102 may be adapted to house one or more optical components 112. Moreover, the one or more optical components 112 may be, but not limited to, fiber adapters, splice holders, splitter, and the like. Aspects of the present disclosure are intended to include and/or otherwise cover any type of the one or more optical components 112, known to a person having ordinary skill in the art, without deviating from the scope of the present disclosure.

In accordance with an embodiment of present disclosure, the box 102 may have a plurality of ports 106 (as shown in FIG. 1B) such that the plurality of ports 106 are adapted to enable an entry and/or an exit of a plurality of cables (such as a plurality of optical fiber cables 110) to and/or from the enclosure 100, respectively. The enclosure 100 may be, but not limited to, a fiber enclosure, a wire enclosure box, and the like. Aspects of the present disclosure are intended to include and/or otherwise cover any type of the enclosure, including known, related, and later developed technologies, known to a person having ordinary skill in the art.

Further, the enclosure 100 may have the panel 104 that may be adapted to be installed within the enclosure 100. In particular, the panel 104 may be adapted to store the one or more components associated with the enclosure 100 such as, but not limited to, optical components, hardware components, and the like. Aspects of the present disclosure are intended to include and/or otherwise cover any type of the components associated with the enclosure 100, known to a person having ordinary skill in the art.

In some aspects of the present disclosure, the box 102 and the panel 104 may be assembled by way of one or more fasteners (not shown) such that in an assembled configuration the panel 104 is disposed inside the box 102 to form the enclosure 100.

In alternative aspects of the present disclosure, the box 102 and the panel 104 may be made up of a material such as, but not limited to, natural plastic, hardened plastic, and the like. Aspects of the present disclosure are intended to include and/or otherwise cover any type of the material for the box 102 and the panel 104, known to a person having ordinary skill in the art, without deviating from the scope of the present disclosure.

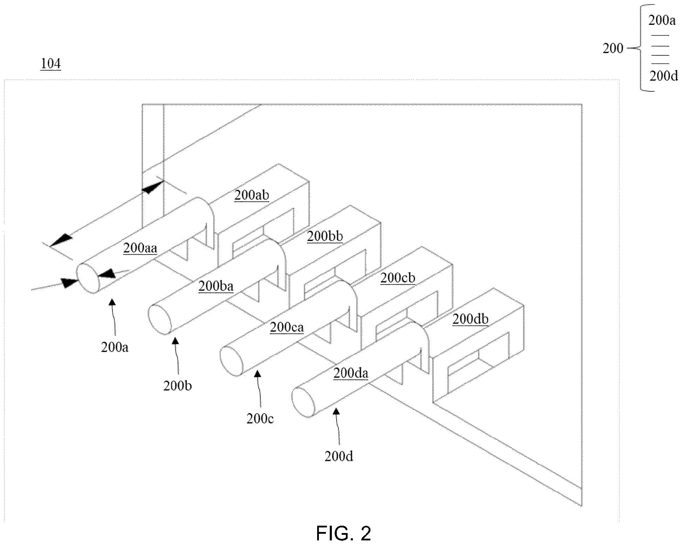

In accordance with an embodiment of present disclosure, the plurality of ports 106 of which first through eleventh ports 106a-106k are shown may be through holes that enable a passage of first through eleventh ports cables (not shown), respectively. In particular, the plurality of ports 106 may have the plurality of recesses 108 (*i.e.*, the through holes), respectively, that can receive a portion of one or more plugs 200 (as shown in FIG. 2). Moreover, the first through eleventh ports 106a-106k may have first through eleventh recesses 108a-108k, respectively, to receive a portion of the one or more plugs plug 200. Further, the plurality of recesses 108 may have a diameter in a range of 2.5 to 11 mm. Alternatively in other embodiments the diameter may be different.

In an embodiment of present disclosure, the plurality of recesses 108 may have a depth of 9 mm. Alternatively, the depth may vary in different embodiments.

In operation, the plurality of ports 106 may be closed by way of a one or more plugs when the plurality of ports 106 are not in use. In particular, the panel 104 may be installed inside the box 102 such that the one or more plugs 200 (as shown in FIG. 2) of the panel 104 are inserted into a recess of the one or more recesses 108 to block a passage through the plurality of ports 106 in a sealed state of the plurality of ports 106.

In an unsealed state of the plurality of ports 106, a breakable portion 200aa (as shown in FIG. 2) of the plug 200a inserted into a port of the plurality of ports 106 may be removed by application of an external force by a user such that when the breakable portion 200aa is removed, the port of the plurality of port 106 is unrestricted. Further, the sealed state may be transitioned into the unsealed state exactly one time by removal of the breakable portion 200aa of the plug 200a by the application of the external force.

In accordance with an embodiment of present disclosure, the transition between the sealed state to the unsealed state is unidirectional and irreversible and occurs precisely once when the user applies the external force to remove the breakable portion 200aa of the plug 200a from the fixed body portion 200ab (as shown in FIG. 2) of the plug 200a. Further, the user may insert one or more fiber cables 110 of which first through fourth fiber cables 110a-110d are shown in FIG. 1A into the first through fourth ports 106a-106d through the created passages over first through fourth fixed body portions 200ab-200db (as shown in FIG. 2) of the first through fourth plugs 200a-200d, respectively. Furthermore, the user may connect a fiber cable of the one or more fiber cables 110 with the one or more optical components 112 inside the enclosure 100.

In accordance with an embodiment of present disclosure, the user may connect the first through fourth fiber cables 110a-110d of the one or more fiber cables 110 with first through fourth optical components 112a-112d of the one or more optical components 112, respectively, inside the enclosure 100.

FIG. 2 is a pictorial snapshot illustrating a panel 104 of the enclosure 100 in accordance with an embodiment of the present disclosure. In particular, the panel 104 may have the one or more plugs 200 of which first through fourth plugs 200a-200d are shown. Further, the panel 104 may have a shape such as, but not limited to, a square shape, a rectangular shape, and the like. Aspects of the present disclosure are intended to include and/or otherwise cover any type of the shape of the panel 104 that can fit inside the enclosure 100, without deviating from the scope of the present disclosure.

In accordance with an embodiment of present disclosure, the one or more plugs 200 may be co-moulded with the panel 104. In particular, the one or more plugs 200 may be co-moulded with the panel 104 by way of a moulding process and/or any additive methods such as, but not limited to, extrusion moulding, compression moulding, blow moulding, injection moulding, and rotational moulding, and the like. Aspects of the present disclosure are intended to include any type of the moulding process and/or any additive methods (*e.g.*, 3D printing, filament deposition FFF, selective laser sintering of metal/plastic dusts, without deviating from the scope of the present disclosure.

In accordance with an embodiment of present disclosure, Fig. 2 illustrates that the one or more plugs 200 has four plugs (*i.e.*, the first through fourth plugs 200a-200d), it will be apparent to a person skilled in the art that the scope of the present disclosure is not limited to it. In various other aspects of the present disclosure, the one or more plugs 200 may have any number of plugs as per requirement of the enclosure 100, without deviating from the scope of the present disclosure. In such a scenario, each plug is configured to perform one or more operations in a manner similar to the operations of the first through fourth plugs 200a-200d as described herein.

In accordance with an embodiment of present disclosure, each plug of the one or more plugs 200 may be defined by one or more breakable portions 200aa-200da connected to one or more fixed body portions 200ab-200db, respectively. In particular, the first through fourth plugs 200a-200d may be defined by first through fourth breakable portions 200aa-200da, respectively, connected to first through fourth fixed body portions 200ab-200db, respectively. For sake of brevity the description hereinafter is focused on the first plug 200a (hereinafter interchangeably referred to and designated as "the plug 200"). As, the structural and functional aspects of the one or more plugs 200 (*i.e.*, the first through fourth plugs 200a-200d) are similar, therefore the description explains only about the structural and functional aspect of the first plug 200a.

In accordance with an embodiment of present disclosure, the plug 200 may have the breakable portion 200aa and the fixed body portion 200ab such that the fixed body portion 200ab provides a passage after removal of the breakable portion 200aa. In particular, the fixed body portion 200ab and the breakable portion 200aa of the plug 200 may be made up of a plastic polymer material such as, but not limited to, Polyvinyl chloride, Polystyrene, Acrylonitrile butadiene styrene, and the like. Aspects of the present disclosure are intended to include and/or otherwise cover any type of the plastic polymer material for the fixed body portion 200ab and the breakable portion 200aa of the plug 200, known to a person having ordinary skill in the art, without deviating from the scope of the present disclosure.

In accordance with an embodiment of present disclosure, the enclosure 100 may have the one or more plugs 200 that may be adapted to restrict a passage through at least one of the plurality of ports 106 (as shown in FIG. 1B) in a sealed state *i.e.*, when the at least one port of the plurality of ports 106 is not in use. In particular, the one or more plugs 200 may be adapted to not restrict a passage through the at least one port of the plurality of ports 106 in an unsealed state *i.e.*, when the at least one port of the plurality of ports 106 is in use. Further, the sealed state can be transitioned into the unsealed state exactly one time. In other words, a transition between the sealed state to the unsealed state is unidirectional and irreversible and occurs precisely once.

In accordance with an embodiment of present disclosure,, the breakable portion 200aa may have a shape such that by virtue of the shape of the breakable portion 200aa, the breakable portion 200aa blocks a passage through at least one port of the plurality of ports 106.

In an exemplary example, in an assembled configuration of the panel 104 inside the enclosure 100, the breakable portion 200aa of the plug 200 may be inserted into the recess 108a of the first port 106a of the plurality of ports 106 to block the passage through the first port 106a.

In accordance with an embodiment of present disclosure, at least 5 millimetres (mm) length of the one or more plugs 200 may be received by a port of the plurality of ports 106.

In an exemplary example, when the plug 200 is inserted into the recess 108a of the first port 106a of the plurality of ports 106 to block the passage through the first port 106a, at least 5 mm length of the breakable portion 200aa of the plug 200 is received by the recess 108a of the first port 106a.

In accordance with an embodiment of present disclosure, the breakable portion 200aa may have a cylindrical shape that may adhere to a shape of the recess 108a of the first port 106a. Although FIG. 2 illustrates that the shape of the breakable portion 200aa is cylindrical, it will be apparent to a person skilled in the art that the scope of the present disclosure is not limited to it and the breakable portion 200aa may have any shape depending on a shape of the recess 108a of the first port 106a, without deviating from the scope of the present disclosure.

In accordance with an embodiment of present disclosure, the fixed body portion 200ab of the plug 200 may have a rectangular shape that may provide a support for the passage of the cable when the breakable portion 200aa is removed by application of an external force. Although FIG. 2 illustrates that the shape of the fixed body portion 200ab is rectangular, it will be apparent to a person skilled in the art that the scope of the present disclosure is not limited to it. In various other aspects of the present disclosure, the fixed body portion 200ab may have any shape such as, but not limited to, a square shape, a cylindrical shape, and the like, without deviating from the scope of the present disclosure.

In some aspects of the present disclosure, the breakable portion 200aa of the plug 200 may have a diameter in a range of 2 millimetres (mm) to 10 mm. Further, the breakable portion 200aa of the plug 200 may have a length in a range of 10 mm to 15 mm.

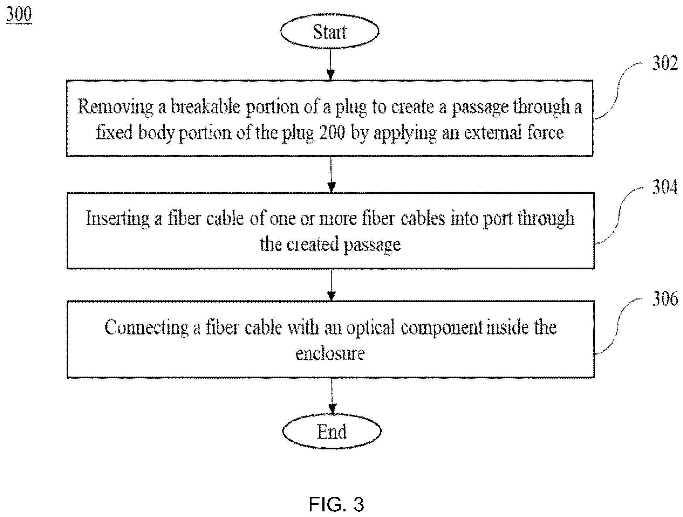

FIG. 3 is a flow chart illustrating a method 300 of installing a fiber cable 300a inside an enclosure 100 with a plurality of ports 106 having one or more plugs 200 in accordance with an embodiment of the present disclosure.

**At** step 302, a user removes the breakable portion 200aa of the plug 200 to create a passage through the fixed body portion 200ab of the plug 200 by applying an external force. In particular, the plug 200 may be co-moulded with the panel 104 such that the panel 104 is received inside the enclosure 100 for managing the one or more optical components 112. Further, the breakable portion 200aa of the plug 200 may be inserted into at least one of the plurality of ports 106 of the enclosure 100 to restrict the passage through the port.

**At** step 304, the user inserts a fiber cable of the one or more fiber cables 110 into the port 106a through the created passage. In another aspect of the present disclosure, the fiber cable of the one or more fiber cables 110 can be secured with a tie-wrap (not shown) to the fixed body portion 200ab of the plug 200.

At step 306, the user connects a fiber cable of the one or more fiber cables 110 with an optical component of the one or more optical components 112 inside the enclosure 100.

The method further comprising placing a the breakable portion (200aa-200da) of the one or more plugs (200) into at least one of the plurality of ports (106) of the enclosure (100) to restrict a passage through the at least one of the plurality of ports (106). Further, the one or more plugs (200) is co-moulded over a panel (104) that is received inside the enclosure (100) for managing the one or more optical components (112).

The method comprising a step of receiving a plurality of ports 106 has a plurality of recesses 108 configured to receive a portion of the one or more plugs 106.

The method 300 further comprising housing one or more optical components in a box 102, wherein the box 102 having the plurality of ports 106; installing a panel 104 inside the box 102 to receive the one or more optical components and co-moulding the one or more plugs 200 with the panel 104.

In accordance with an embodiment of the present disclosure, one or more plugs 200 is defined by a breakable portion 200aa-200da connected to a fixed body portion 200ab-200db. The fixed body portion 200ab-200db provides a passage after removal of the breakable portion 200aa-200da.

Advantageously, the enclosure 100 of the present disclosure provides a solution where the one or more plugs 200 are co-moulded with the panel 104 such that the one or more plugs 200 are used to seal the grommets in the mould onto an inner part of the enclosure 100. Moreover, the one or more plugs 200 may be made in way such that the one or more plugs 200 can be easily removed by breakage and to allow the fiber cables to pass through the plurality of ports 106 of the enclosure 100. Specifically, the one or more plugs 200 are moulded with the panel 104 which is a part of the enclosure 100 and the panel 104 is used to store one or more optical components. Further, the one or more plugs 200 are designed as one-time breakable structure. Furthermore, the enclosure 100 facilitates in easier management of the cables with no small pieces to handle that result in cost reduction. Additionally, while in use, only required ports can be opened while keeping the other ports of the plurality of ports 106 in the sealed state.

The foregoing descriptions of specific aspects of the present technology have been presented for the purpose of illustration and description. They are not intended to be exhaustive or to limit the present technology to the precise forms disclosed, and obviously many modifications and variations are possible in light of the above teaching. The aspects were chosen and described in order to best explain the principles of the present technology and its practical application, to thereby enable others skilled in the art to best utilize the present technology and various aspects with various modifications as are suited to the particular use contemplated. It is understood that various omissions and substitutions of equivalents are contemplated as circumstance may suggest or render expedient, but such are intended to cover the application or implementation without departing from the spirit or scope of the claims of the present technology.

While several possible aspects of the disclosure have been described above and illustrated in some cases, it should be interpreted and understood as to have been presented only by way of illustration and example, but not by limitation. Thus, the breadth and scope of a preferred aspect should not be limited by any of the above-described exemplary aspects.

## Claims

1. An enclosure (100) **characterized in that**:
a plurality of ports (106); and
one or more plugs (200) that restrict a passage through at least one of the plurality of ports (106) in a sealed state and does not restrict the passage through the at least one of the plurality of ports (106) in an unsealed state,
wherein the sealed state is transitioned to the unsealed state exactly one time, wherein the transition between the sealed state to the unsealed state is unidirectional and irreversible and occurs precisely once.

2. The enclosure (100) of claim 1, wherein the one or more plugs (200) is defined by a breakable portion (200aa-200da) connected to a fixed body portion (200ab-200db).

3. The enclosure (100) of claim 2,wherein the fixed body portion (200ab-200db) provides a passage after removal of the breakable portion (200aa-200da).

4. The enclosure (100) of claim 1, wherein the one or more plugs (200) is defined by a breakable portion (200aa-200da), where the breakable portion (200aa-200da) has a shape to block the passage through at least one of the plurality of ports (106).

5. The enclosure (100) of claim 1, wherein the plurality of ports (106) has a plurality of recesses (108) configured to receive a portion of the one or more plugs (106).

6. The enclosure (100) of claim 1, wherein the enclosure further comprising:
a box (102) to house one or more optical components, wherein the box (102) having the plurality of ports (106); and
a panel (104) to be installed inside the box (102) configured to receive the one or more optical components,
wherein the one or more plugs (200) are co-moulded with the panel (104).

7. The enclosure (100) of claim 1, wherein at least 5 millimetres (mm) length of the one or more plugs (200) is received by the plurality of ports (106).

8. A method (300) of installing a fiber cable of one or more fiber cables (110) inside an enclosure (100) with a plurality of ports (106) having one or more plugs (200), 300**characterized in that** steps of:
removing a breakable portion (200aa-200da) of a plug (200a-200d) to create a passage through a fixed body portion (200ab-200db) of the one or more plugs (200);
inserting a fiber cable of the one or more fiber cables (110) into a port of the plurality of ports (106) through the created passage; and
connecting the fiber cable of the one or more fiber cables (110) with an optical component of one or more optical components (112) inside the enclosure (100).

9. The method (300) of claim 8, wherein the method comprises placing the breakable portion (200aa-200da) of the one or more plugs (200) into at least one of the plurality of ports (106) of the enclosure (100) to restrict a passage through the at least one of the plurality of ports (106).

10. The method (300) of claim 9, wherein method comprises step of co moulding the one or more plugs (200) over a panel (104) that is received inside the enclosure (100) for managing the one or more optical components (112).

11. The method (300) of claim 8, wherein the plurality of ports (106) has a plurality of recesses (108) configured to receive a portion of the one or more plugs (106).

12. The method (300) of claim 8, wherein at least 5 millimetres (mm) length of the one or more plugs (200) is received by the plurality of ports (106).

13. The method (300) of claim 8, wherein the method further comprising:
housing one or more optical components in a box (102), wherein the box (102) having the plurality of ports (106); and
installing a panel (104) inside the box (102) to receive the one or more optical components,
wherein the one or more plugs (200) are co-moulded with the panel (104).

14. The method (300) of claim 8, wherein the one or more plugs (200) is defined by a breakable portion (200aa-200da) connected to a fixed body portion (200ab-200db).

15. The method (300) of claim 14, wherein the fixed body portion (200ab-200db) provides a passage after removal of the breakable portion (200aa-200da).
